# EUROPÄISCHE PATENTSCHRIFT

(11) **EP 4 198 371 B1**
(45) Veröffentlichungstag und Bekanntmachung des Hinweises auf die Patenterteilung: **18.09.2024**
(21) Anmeldenummer: 22201864.0
(22) Anmeldetag: 17.10.2022
(51) Int. Cl.: F16L 51/00, F16L 59/02, F16L 59/18, F16L 59/21, F16L 55/17

(54) **KOMPENSATOR FÜR EINE INDUSTRIEROHRLEITUNG**
COMPENSATOR FOR AN INDUSTRIAL PIPELINE
COMPENSATEUR DE PIPELINE INDUSTRIEL

(30) Priorität: 20.12.2021 DE 102021133877
(43) Veröffentlichungstag der Anmeldung: 21.06.2023
(73) Patentinhaber: EagleBurgmann Germany GmbH & Co. KG, 82515 Wolfratshausen (DE)
(72) Erfinder: MAEGAARD, Kristian, 6600 Vejen (DK)
(74) Vertreter: Hoefer & Partner Patentanwälte mbB

(56) Entgegenhaltungen:
- CN-A- 106 567 977
- CN-Y- 2 184 130
- DE-A1- 102016 119 336
- US-A1- 2016 363 252
- TEMPLE DE G ET AL: "FUNKTIONSTUECHTIGE WEICHSTOFF-KOMPENSATOREN FUER GASTURBINENANLAGEN", BWK BRENNSTOFF WARME KRAFT, SPRINGER VDI VERLAG, DUSSELDORF, DE, vol. 48, no. 3, 1 March 1996 (1996-03-01), pages - 45, XP000581444, ISSN: 1618-193X

## Beschreibung

Die vorliegende Erfindung betrifft einen mehrlagigen Kompensator einer Industrierohrleitung, wie beispielsweise einer Rauchgasleitung eines Kraftwerks. Ferner betrifft die vorliegende Erfindung eine Industrierohrleitung mit einem erfindungsgemäßen mehrlagigen Kompensator.

Kompensatoren sind aus dem Stand der Technik in Fluid-Transportsystemen wie beispielsweise Industrierohrleitungen in unterschiedlichen Ausgestaltungen bekannt. Kompensatoren stellen dabei eine flexible Verbindung zweier Rohrenden bereit, um beispielsweise thermische Längenänderungen der Rohre auszugleichen und gegebenenfalls kleine Relativbewegungen zwischen den Rohrenden, beispielsweise aufgrund von Druckänderungen, auszugleichen. Kompensatoren müssen dabei zum Teil extreme Bedingungen aushalten, beispielsweise sehr hohe Temperaturen oder aggressive Medien, welche durch die Rohrleitungen geführt sind. Ein Beispiel derartiger Rohrleitungen ist in einem Kraftwerk eine Rauchgasableitung. Die DE 10 2018 208 477 A1 zeigt beispielsweise einen Kompensator. Andere Arten von Kompensatoren sind beispielsweise Faltenbälge, welche vorzugsweise aus Metall hergestellt sind. Im Betrieb derartiger Kompensatoren tritt nun das Problem auf, dass diese gegebenenfalls beschädigt werden können. Üblicherweise sind die bekannten Kompensatoren hülsenförmig, so dass, falls der Kompensator nicht vor Ort repariert werden kann, ein Austausch notwendig ist. Hierzu muss der Kompensator komplett ausgebaut werden und ein neuer Kompensator in das Rohrleitungssystem eingesetzt werden. Hierbei muss die Industrieanlage stillstehen, was sehr hohe Kosten erzeugt. Ein derartiger Austausch der Kompensatoren, welche üblicherweise Durchmesser von 1 bis 2 m aufweisen, kann hierbei mehrere Stunden oder Tage dauern. Dies ist für Betreiber von Industrieanlagen ein großes Problem.

Die US 2016/363252 A1 beschreibt einen Kompensator, der einen gerollten, zweistufig geformten dynamischen Flansch aus rostfreiem Stahl umfasst, der auf eine zylindrische Innenhülse geschweißt ist, so dass die Innenhülse an einem Ende mit dem Gasauslass verbunden ist und dass der Kompensator Thermoschocks standhalten kann aufgrund des schnellen Temperaturanstiegs. Der Kompensator wird in eine Kompensatorbaugruppe eingebaut, die den Kompensator, eine Abdeckung, mindestens ein Isoliermaterial, eine ringförmige Verlängerungswand und eine Stützrahmenkonstruktion umfasst. Das Isoliermaterial ist vorzugsweise ein gestrickter rostfreier Stahl, der mit einer keramischen Isolierung gefüllt ist.

Es ist daher Aufgabe der vorliegenden Erfindung, einen möglichst einfachen und schnell zu montierenden Kompensator bereitzustellen, welcher insbesondere auch bei einer

Beschädigung eines vorhandenen Kompensators als Ersatz-Kit oder Reparatur-Kit verwendet werden kann und schnell und einfach montiert werden kann.

Diese Aufgabe wird durch einen mehrlagigen Kompensator mit den Merkmalen des Anspruchs 1 gelöst. Die Unteransprüche zeigen bevorzugte Weiterbildungen der Erfindung.

Der erfindungsgemäße mehrlagige, in Längsrichtung geteilte Kompensator für eine Industrierohrleitung mit den Merkmalen des Anspruchs 1 weist demgegenüber den Vorteil auf, dass der Kompensator als Reparatur-Kit oder Ersatz-Kit für einen vorhandenen Kompensator verwendet werden kann. Alternativ kann der mehrlagige Kompensator auch als neu einzubauendes Bauteil verwendet werden. Der Kompensator kann insbesondere aber an bestehende Rohrleitungen einer Industrierohrleitung aufgrund seiner Mehrteiligkeit eingesetzt werden. Hierbei ist insbesondere eine besonders schnelle und einfache Montage des Kompensators möglich. Ein beschädigter, schon vorhandener alter Kompensator an der Industrierohrleitung kann dabei an der Industrierohrleitung verbleiben. Der erfindungsgemäße Kompensator wird dabei von einer Außenseite über den beschädigten Kompensator angelegt, dann werden die einzelnen Lagen an den in Längsrichtung verlaufenden Trennstellen verbunden und dann wird der Kompensator mit den Rohrenden verbunden. Dabei ist der erfindungsgemäße Kompensator sehr einfach und kostengünstig aufgebaut. Dies wird erfindungsgemäß dadurch erreicht, dass der Kompensator zum Verbinden eines ersten Rohrendes mit einem zweiten Rohrende einen lagenartigen und in Längsrichtung geteilten Kompensator umfasst, wobei mehrere übereinander angeordnete Lagen aus unterschiedlichen Materialien und mit unterschiedlichen Funktionen vorgesehen sind. Die Lagen sind dabei mindestens einmal, vorzugsweise mehrmals, in Längsrichtung geteilt, und derart eingerichtet, von einer Außenseite an die zu verbindenden Rohrseiten angebracht und an den Teilungsstellen der einzelnen Lagen verbunden zu werden. Ein bereits beschädigter, vorhandener Kompensator muss dabei nicht ausgebaut werden, so dass keine Trennung der Rohrleitung für die Fixierung des erfindungsgemäßen Kompensators erfolgt. Die mehreren Lagen des Kompensators sind dabei in Längsrichtung des Kompensators geteilt. Erst nach Anbringen der Teile einer Lage an der Rohrleitung erfolgt dann ein Verbinden der jeweiligen Lage zu der üblichen, hülsenartigen Form.

Je nach Material der einzelnen Lagen weisen diese genau nur eine Längsteilung auf oder mehrere Längsteilungen. Der Kompensator umfasst ein metallisches, längsgeteiltes Drahtgewebe, welches eine Innenlage des Kompensators bildet. Ferner umfasst der Kompensator ein Isolationsmaterial, welches das Drahtgewebe an einer Außenseite umgibt. Weiter umfasst der Kompensator eine längsgeteilte erste Metallringscheibe und eine längsgeteilte zweite Metallringscheibe. Die erste Metallringscheibe ist dabei an einem ersten Längsende des Kompensators angeordnet und die zweite Metallringscheibe ist an einem zweiten Längsende des Kompensators angeordnet. Ferner ist eine fluiddichte, längsgeteilte Gewebelage als äußerste Lage des Kompensators vorgesehen, welcher an der Außenseite des Isolationsmaterials angeordnet ist. Die Gewebelage ist dabei fluiddicht mit der ersten und zweiten Metallringscheibe verbunden.

Somit weist der mehrteilige Kompensator mehrere Lagen auf, welche wenigstens einmal, in Abhängigkeit des Materials gegebenenfalls auch mehrmals, in Längsrichtung des Kompensators geteilt sind. Beispielsweise ist die innerste Lage, welche das metallische Drahtgewebe ist, vorzugsweise nur einmal in Längsrichtung geteilt, da aufgrund der Flexibilität des metallischen Drahtgewebes dieses um die bestehenden Rohrenden und den beschädigten Kompensator durch Aufbiegen und Überstülpen herum positioniert werden kann. Anschließend kann die Stoßstelle am metallischen Drahtgewebe, beispielsweise mittels eines Hilfsdrahts oder durch eine Schweißverbindung verbunden werden. In einem nächsten Schritt wird dann das Isolationsmaterial an der Außenseite des metallischen Drahtgewebes angebracht. Das Isolationsmaterial kann dabei ebenfalls in Längsrichtung des Kompensators geteilt sein oder beispielsweise auch eine Vielzahl von Einzelstücken aufweisen. Anschließend werden die erste und zweite Metallringscheibe, welche jeweils zumindest einmal längsgeteilt sind, am ersten und zweiten Längsende des Kompensators angeordnet. Die Teile der ersten und zweiten Metallringscheibe werden dann vorzugsweise mittels Schweißverbindungen miteinander verbunden. Als Letztes wird die fluiddichte Gewebelage, welche ebenfalls zumindest einmal in Längsrichtung geteilt ist, an der Außenseite des Isolationsmaterials angeordnet und dann fluiddicht mit der ersten und zweiten Metallringscheibe verbunden. Damit ist der hülsenartige Kompensator fertiggestellt und kann an den Metallringscheiben mit den Rohrenden, z.B. mittels Schweißen, verbunden werden.

Somit kann der erfindungsgemäße mehrteilige Kompensator als Reparatur-Kit vorgesehen sein und schnell und relativ einfach an den Rohrenden fixiert werden. Dadurch muss kein langer Stillstand einer Industrieanlage, in welcher der Kompensator verwendet wird, vorliegen.

Vorzugsweise ist die Verbindung zwischen der Gewebelage und der ersten und zweiten Metallringscheibe mittels Schraubverbindungen realisiert. Diese können einfach und schnell angebracht werden. Weiterhin können diese auch wieder gelöst werden, so dass gegebenenfalls auch ein Teileaustausch von Teilen des Kompensators möglich ist.

Weiter bevorzugt weist die erste Metallringscheibe einen ersten Fixierflansch auf und die zweite Metallringscheibe weist einen zweiten Fixierflansch auf. Die Gewebelage ist dabei mittels der Vielzahl von Schraubverbindungen zwischen einem ersten Stützstreifen und dem ersten Fixierflansch sowie einem zweiten Stützstreifen und dem zweiten Fixierflansch fluiddicht verbunden. Die Schraubverbindungen umfassen vorzugsweise jeweils einen Schraubbolzen und eine Mutter, so dass die Gewebelage, die Fixierflansche und die Stützstreifen zwischen dem Kopf des Schraubbolzens und der Mutter geklemmt sind.

Um einen besonders kompakten und möglichst große Drücke aufnehmenden Aufbau aufzuweisen, weist das Drahtgewebe vorzugsweise einen ersten und zweiten nach außen vorstehenden Endbereich auf. Der erste und zweite Endbereich stehen somit von einer Basis des Drahtgewebes nach außen vor. Vorzugsweise sind die beiden ersten und zweiten nach außen vorstehenden Endbereiche jeweils parallel zu einer Metallringscheibe.

Weiter bevorzugt ist das metallische Drahtgewebe mittels eines Verbindungselements mit der ersten und zweiten Metallringscheibe verbunden. Das Verbindungselement ist vorzugsweise ein Schraubbolzen mit einer Scheibe mit relativ großem Durchmesser, welche das Drahtgewebe der ersten und zweiten Metallringscheibe verbinden. Entlang des Umfangs sind dabei vorzugsweise mehrere Verbindungselemente vorgesehen.

Weiter bevorzugt sind die erste und zweite Metallringscheibe in einem Winkel von 40° bis 50°, besonders bevorzugt 45°, zu einer Mittelachse des Kompensators angeordnet und zueinander geneigt.

Gemäß einer weiteren bevorzugten Ausgestaltung der Erfindung weist das metallische Drahtgewebe an einer Basis einen Aufnahmebereich auf, welcher zur Aufnahme eines beschädigten, bereits vorhandenen, die Rohrenden verbindenden Kompensators dient.

Vorzugsweise ist die äußere Gewebelage im Längsschnitt bogenförmig ausgebildet, insbesondere um Längenänderungen aufgrund beispielsweise von Temperaturänderungen gut ausgleichen zu können. Der Bogen der Gewebelage ist vorzugsweise nach außen gerichtet.

Um eine sichere Fixierung des mehrlagigen Kompensators zu ermöglichen, weist das metallische Drahtgewebe vorzugsweise einen ersten und zweiten Auflagebereich an der Basis auf, welche an den Längsenden des Drahtgewebes vorgesehen sind. Jeweils einer der Auflagebereiche liegt dabei an jeweils einem Rohrende an dessen Außenumfang auf.

Der mehrteilige Kompensator ist vorzugsweise derart aufgebaut, dass die Metallringscheibe vorzugsweise zweiteilig oder dreiteilig oder vierteilig ausgebildet ist.

Weiter bevorzugt ist das metallische Drahtgewebe zweiteilig oder dreiteilig oder vierteilig ausgebildet. Gemäß einer weiteren bevorzugten Ausgestaltung ist die äußere Gewebelage zweiteilig oder dreiteilig oder vierteilig ausgebildet. Vorzugsweise ist das Isolationsmaterial ebenfalls zweiteilig oder dreiteilig oder vierteilig ausgebildet.

Weiter bevorzugt ist ein Innendurchmesser des mehrlagigen Kompensators größer oder gleich 1m, insbesondere größer oder gleich 2m und vorzugsweise größer oder gleich 4m.

Weiter bevorzugt sind die Teile der ersten und zweiten Metallringscheibe jeweils miteinander mittels Schweißverbindungen verbunden. Vorzugsweise sind die Metallringscheiben auch mittels Schweißverbindungen mit den Rohrenden der Industrierohrleitung verbunden.

Der erfindungsgemäße mehrteilige Kompensator wird vorzugsweise in einer Industrieanlage in einer Rohrleitung als Reparatur-Kit verwendet. Die Rohrleitung ist vorzugsweise in einem Kraftwerk, beispielsweise eine Rauchgasrohrleitung.

Nachfolgend wird unter Bezugnahme auf die begleitende Zeichnung ein bevorzugtes Ausführungsbeispiel der Erfindung im Detail beschrieben. In der Zeichnung ist:
- Fig. 1: eine schematische Draufsicht eines Kompensators gemäß einem bevorzugten Ausführungsbeispiel der Erfindung im montierten Zustand,
- Fig. 2: eine schematische Schnittansicht in Längsrichtung des Kompensators im montierten Zustand, und
- Fig. 3: eine vergrößerte Teilschnittansicht des Kompensators von Fig. 2.

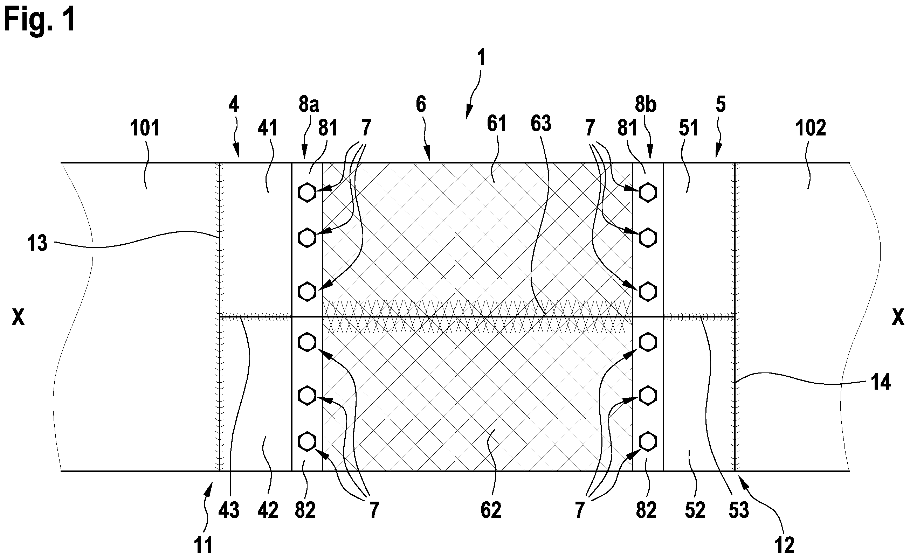

Nachfolgend wird ein mehrlagiger, in Längsrichtung X-X geteilter, Kompensator 1 gemäß einem bevorzugten Ausführungsbeispiel der Erfindung unter Bezugnahme auf die Figuren 1 bis 3 im Detail beschrieben.

Der Begriff "mehrlagiger, in Längsrichtung X-X geteilter, Kompensator" bezieht sich dabei nicht nur darauf, dass der Kompensator aus mehreren übereinander angeordneten Lagen hergestellt ist, sondern auch darauf, dass einzelne Lagen in Längsrichtung geteilt oder mehrteilig ausgebildet sind. Dadurch kann eine Montage des Kompensators an eine bestehende Rohrleitung von außen ermöglicht werden, ohne dass eine komplette Demontage eines Rohrverbinders notwendig ist.

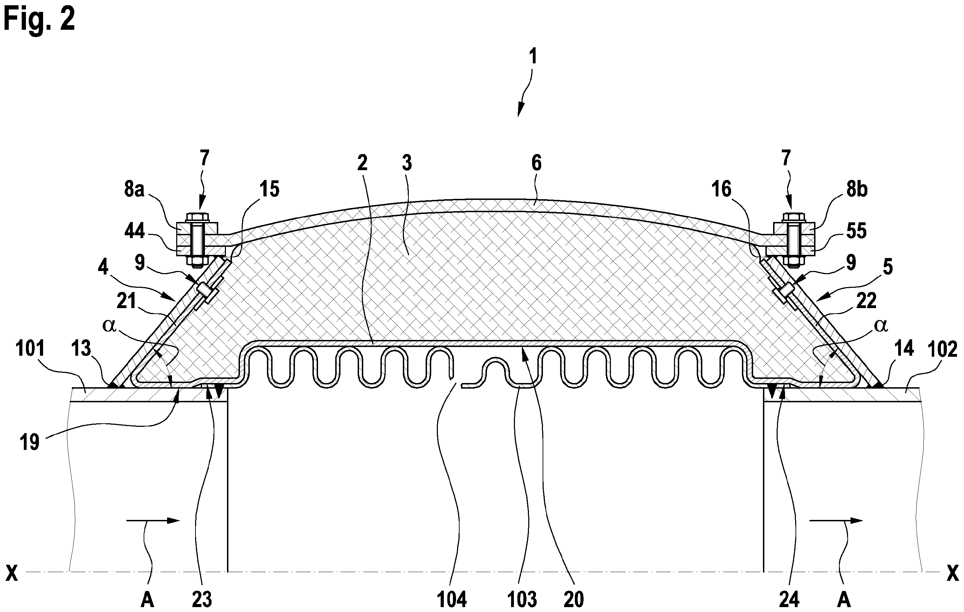

Wie aus den Figuren 1 und 2 ersichtlich ist, weist der Kompensator 1 ein erstes Längsende 11 und ein zweites Längsende 12 auf, und verbindet ein erstes Rohrende 101 mit einem zweiten Rohrende 102. Durch das Rohr strömt ein gasförmiges Medium, beispielsweise Rauchgas, wie in Fig. 2 durch den Pfeil A angedeutet.

Wie weiter aus Fig. 2 ersichtlich ist, sind das erste und zweite Rohrende 101, 102 schon mittels eines Metallfaltenbalgs 103 miteinander verbunden, wobei der Metallfaltenbalg 103 jedoch eine Beschädigung 104, beispielsweise einen Riss oder ein Loch oder dergleichen aufweist. Daher dient der mehrteilige Kompensator 1 der Erfindung als Reparatur-Kit, wobei die Reparatur der Rohrleitung ohne Demontage des alten beschädigten Faltenbalgs 103 möglich ist. Dadurch kann eine Stillstandszeit der Anlage, in welcher die Rohrleitung verwendet wird, minimiert werden.

Der Kompensator 1 umfasst ein metallisches Drahtgewebe 2, welches eine Innenlage des Kompensators bildet. Die Innenlage bildet dabei die innerste Lage des Kompensators. Das Drahtgewebe 2 weist dabei einen Aufnahmebereich 20 an einer Basis 19 auf, in welcher der beschädigte Faltenbalg 103 aufgenommen ist. Weiterhin weist die Basis 19 des Drahtgewebes einen ersten Auflagebereich 23 und einen zweiten Auflagebereich 24 auf. Der erste Auflagebereich 23 liegt dabei auf einer Außenseite des ersten Rohrendes 101 auf und der zweite Auflagebereich 24 liegt an einer Außenseite des zweiten Rohrendes 102 auf.

An den ersten Auflagebereich 23 schließt sich ein nach außen vorstehender erster Endbereich 21 an. An den zweiten Auflagebereich 24 schließt sich ein nach außen vorstehender zweiter Endbereich 22 an. Der erste und zweite Endbereich 21, 22 ist dabei jeweils in einem Winkel α von ca. 45° zur Mittelachse des Kompensators 1 angeordnet. Wie aus Fig. 2 ersichtlich ist, sind die Winkel α des ersten und zweiten Endbereichs 21, 22 dabei gegenläufig, so dass das Drahtgewebe 2 im Schnitt eine Kegelstumpfform aufweist.

Das metallische Drahtgewebe 2 ist in diesem Ausführungsbeispiel derart aufgebaut, dass das Drahtgewebe einen durchgehenden Schlitz in Längsrichtung X-X aufweist und somit einteilig ausgebildet ist. Zur Montage kann das metallische Drahtgewebe 2 aufgebogen werden und um den beschädigten Faltenbalg 103 herumgelegt werden. Anschließend kann der Längsschlitz im Drahtgewebe 2 beispielsweise mittels Verflechten oder Verschweißen von einzelnen Drahtenden geschlossen werden. Alternativ wäre es auch denkbar, dass das Drahtgewebe 2 in Längsrichtung mehrteilig ausgebildet ist und somit mehrere Längsverbindungsstellen aufweist.

Der Kompensator 1 umfasst ferner ein Isolationsmaterial 3, welches das Drahtgewebe 2 an einer Außenseite umgibt. Das Isolationsmaterial 3 dient zur thermischen Isolation der Rohrleitung und kann ebenfalls aus mehreren Teilen ausgebildet sein, die dann schalenartig an der Außenseite des Drahtgewebes 2 angebracht werden. Je nach Art des Isolationsmaterials können die Einzelteile miteinander verbunden werden oder am Drahtgewebe befestigt werden.

Weiterhin umfasst der Kompensator eine erste Metallringscheibe 4 und eine zweite Metallringscheibe 5. Die erste und zweite Metallringscheibe 4, 5 sind jeweils mehrteilig ausgebildet. In diesem Ausführungsbeispiel sind die erste und zweite Metallringscheibe 4, 5 zweiteilig aus zwei Halbringteilen ausgebildet. Dies ist aus Fig. 1 ersichtlich, wobei die erste Metallringscheibe 4 einen ersten Teil 41 und einen zweiten Teil 42 aufweist, welche jeweils halbringförmig ausgebildet sind. Der erste und zweite Teil 41, 42 sind mittels einer ersten Schweißverbindung 43 miteinander verbunden. Um 180° entgegengesetzt (nicht dargestellt) ist eine weitere Schweißverbindung zur Verbindung der halbringförmigen Teile 41, 42 der ersten Metallringscheibe 4 vorgesehen.

In gleicher Weise ist die zweite Metallringscheibe 5 mit einem ersten Teil 51 und einem zweiten Teil 52 vorgesehen, welche mittels einer zweiten Schweißverbindung 53 und einer weiteren, nicht dargestellten Schweißverbindung miteinander verbunden sind.

Wie weiter aus Fig. 2 ersichtlich ist, weist die erste Metallringscheibe 4 einen ersten Fixierflansch 44 auf, welcher in Richtung der Mittelachse von der ersten Metallringscheibe 4 vorsteht. In gleicher Weise ist die zweite Metallringscheibe 5 mit einem zweiten in Richtung der Mittelachse vorstehenden zweiten Fixierflansch 55 ausgebildet.

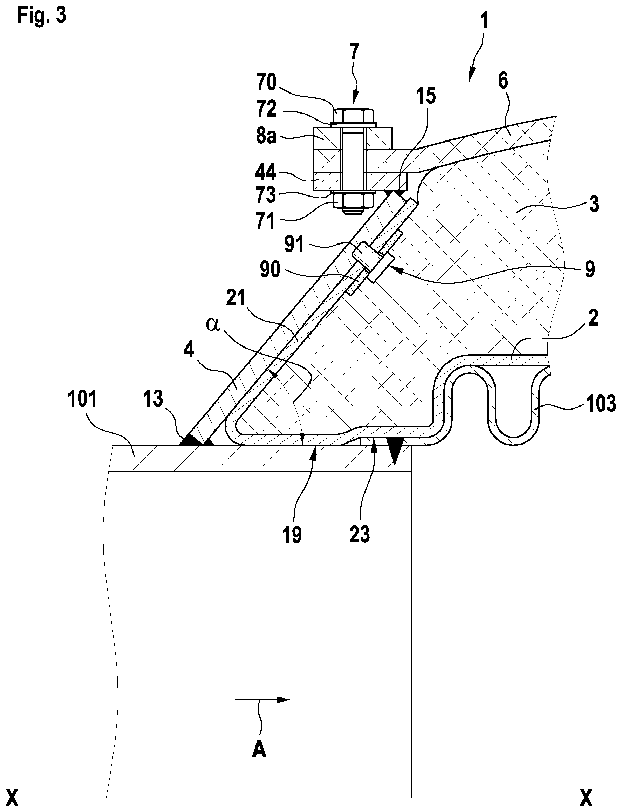

Weiterhin ist ein Verbindungselement 9 vorgesehen, welches das Drahtgewebe 2 mit der ersten Metallringscheibe 4 bzw. der zweiten Metallringscheibe 5 verbindet. Das Verbindungselement 9 umfasst dabei eine Scheibe 90 sowie einen Schraubbolzen 91 (vgl. Fig. 3), wobei mehrere Verbindungselemente 9 entlang des Umfangs vorgesehen sind, um das Drahtgewebe 2 an einer Vielzahl von Stellen mit der ersten Metallringscheibe 4 bzw. der zweiten Metallringscheibe 5 zu verbinden.

Der Kompensator 1 umfasst ferner eine fluiddichte Gewebelage 6, welche die äußerste Lage des Kompensators bildet. Wie aus Fig. 2 ersichtlich ist, ist die Gewebelage 6 bogenförmig ausgebildet. Dadurch kann der Kompensator sehr gut wärmebedingte Längenänderungen zwischen dem ersten und zweiten Rohrende 101, 102 ausgleichen.

Die Gewebelage 6 ist ebenfalls aus zwei Teilen ausgebildet, die mittels einer fluiddichten Verbindungsnaht 63 und einer weiteren, nicht dargestellten Verbindungsnaht (180° entgegengesetzt) miteinander verbunden sind (vgl. Fig. 1). Die Gewebelage 6 umfasst einen ersten halbringförmigen Teil 61 und einen zweiten halbringförmigen Teil 62.

Die Gewebelage 6 ist dabei auch fluiddicht mit der ersten und zweiten Metallringscheibe 4, 5 verbunden. Dies ist im Detail aus Fig. 3 ersichtlich. Hierbei ist zur Verbindung zwischen Gewebelage 6 und der ersten Metallringscheibe 4 eine Vielzahl von Schraubverbindungen 7 vorgesehen (vgl. Fig. 1). Jede Schraubverbindung 7 umfasst einen Schraubbolzen 70 und eine Mutter 71. Ferner ist ein erster Stützstreifen 8a aus Metall vorgesehen, so dass die Gewebelage 6 zwischen dem ersten Stützstreifen 8a und dem ersten Fixierflansch 44 mittels der Schraubverbindung 7 geklemmt ist. Hierbei ist eine erste und zweite Unterlegscheibe 72, 73 am Kopf des Schraubbolzens bzw. der Mutter vorgesehen. In gleicher Weise ist das gegenüberliegende Ende der Gewebelage 6 zwischen dem zweiten Fixierflansch 55 und einem zweiten Stützstreifen 8b geklemmt.

Somit sind an jedem Ende der Gewebelage 6 Stützstreifen 8a, 8b aus Metall vorgesehen, welche jeweils aus einem ersten Teilring 81 und einem zweiten Teilring 82 ausgebildet sind. Die beiden Teilringe 81, 82 sind dabei Halbringe.

Durch das Klemmen der Gewebelage 6 an beiden freien Enden zwischen den Stützstreifen 8 und den Fixierflanschen 44, 45, kann auch eine sichere Abdichtung des Kompensators zur Außenseite hin erreicht werden.

Wie aus Fig. 3 ersichtlich ist, sind der erste Fixierflansch 44 und die erste Metallringscheibe 4 mittels einer dritten Schweißverbindung 15 miteinander verbunden. In gleicher Weise ist auch der zweite Fixierflansch 55 mittels einer vierten Schweißverbindung 16 mit der zweiten Metallringscheibe 5 verbunden.

Wie weiter aus den Figuren 1 und 2 ersichtlich ist, ist der Kompensator 1 dabei mit dem ersten Rohrende 101 und dem zweiten Rohrende 102 verschweißt. Hierbei ist eine fünfte Schweißverbindung 13 zwischen dem ersten Rohrende 101 und der ersten Metallringscheibe 4 vorgesehen. Eine sechste Schweißverbindung 14 ist zwischen der zweiten Metallringscheibe 5 und dem zweiten Rohrende 102 vorgesehen.

Durch den mehrlagigen Aufbau des Kompensators, bei dem einige Lagen mehrteilig ausgebildet sind, kann der Kompensator 1 somit bei einem schon an einer Rohrverbindung bestehenden, beschädigten Kompensator von außen über diesen beschädigten Kompensator montiert werden. Da die Rohrleitung, an der erfindungsgemäße Kompensatoren verwendet werden, üblicherweise einen Durchmesser von mehreren Metern aufweisen, kann dadurch auch eine Handhabung der Einzelteile des Kompensators erleichtert werden, da durch die Teilung der Lagen des Kompensators die einzelnen Teile weniger wiegen als ein entsprechendes hülsenförmiges, einstückiges Bauteil. Wenn die Beschädigung im Faltenbalg 103 nur klein ist, kann sogar während des laufenden Betriebs der Kompensator als Reparatur-Kit über den beschädigten Faltenbalg 103 montiert werden.

Neben der vorstehenden schriftlichen Beschreibung der Erfindung wird zu deren ergänzender Offenbarung hiermit explizit auf die zeichnerische Darstellung der Erfindung in den Fig. 1 bis 3 Bezug genommen.

### Bezugszeichenliste

- 1: mehrlagiger, in Längsrichtung geteilter Kompensator
- 2: metallisches Drahtgewebe
- 3: Isolationsmaterial
- 4: erste Metallringscheibe
- 5: zweite Metallringscheibe
- 6: Gewebelage
- 7: Schraubverbindung
- 8a: erster Stützstreifen
- 8b: zweiter Stützstreifen
- 9: Verbindungselement
- 11: erstes Längsende des Kompensators
- 12: zweites Längsende des Kompensators
- 13: fünfte Schweißverbindung
- 14: sechste Schweißverbindung
- 15: dritte Schweißverbindung
- 16: vierte Schweißverbindung
- 19: Basis
- 20: Aufnahmebereich
- 21: nach außen vorstehender erster Endbereich
- 22: nach außen vorstehender zweiter Endbereich
- 23: erster Auflagebereich
- 24: zweiter Auflagebereich
- 41: erster Teil der Metallringscheibe
- 42: zweiter Teil der Metallringscheibe
- 43: erste Schweißverbindung
- 44: erster Fixierflansch
- 51: erster Teil der zweiten Metallringscheibe
- 52: zweiter Teil der Metallringscheibe
- 53: zweite Schweißverbindung
- 55: zweiter Fixierflansch
- 61: erster Teil der Gewebelage
- 62: zweiter Teil der Gewebelage
- 63: fluiddichte Verbindungsnaht
- 70: Schraubbolzen
- 71: Mutter
- 72: erste Unterlegscheibe
- 73: zweite Unterlegscheibe
- 81: erster Teilring des Stützstreifens
- 82: zweiter Teilring des Stützstreifens
- 90: Scheibe
- 91: Schraubbolzen
- 101: erstes Rohrende
- 102: zweites Rohrende
- 103: Metallfaltenbalg
- 104: Beschädigung
- A: Strömungsrichtung in der Rohrleitung
- X-X: Längsrichtung
- α: Winkel

## Patentansprüche

1. Mehrlagiger, derart in Längsrichtung (X-X) geteilter Kompensator für eine Industrierohrleitung dass dadurch der Kompensator an eine bestehende Rohrleitung von außen ohne eine komplette Demontage eines Rohrverbinders montierbar ist, wobei der Kompensator zur Verbindung eines ersten Rohrendes (101) mit einem zweiten Rohrende (102) eingerichtet ist, umfassend:
- ein metallisches Drahtgewebe (2), welches eine Innenlage des Kompensators bildet und mindestens eine Trennung in Axialrichtung (X-X) aufweist,
- ein mehrteiliges Isolationsmaterial (3), welches das Drahtgewebe an einer Außenseite umgibt und eine Mittellage des Kompensators bildet,
- eine erste, mehrteilige Metallringscheibe (4) und eine zweite, mehrteilige Metallringscheibe (5), wobei die erste Metallringscheibe (4) an einem ersten Längsende (11) des Kompensators angeordnet ist und die zweite Metallringscheibe (5) an einem zweiten Längsende (12) des Kompensators angeordnet ist, und
- eine fluiddichte Gewebelage (6), welche an der Außenseite des Isolationsmaterials (3) angeordnet ist und eine Außenlage des Kompensators bildet, und mindestens eine Trennung in Axialrichtung (X-X) aufweist,
- wobei die Gewebelage (6) fluiddicht mit der ersten Metallringscheibe (4) und der zweiten Metallringscheibe (5) verbunden ist.

2. Kompensator nach Anspruch 1, wobei eine Verbindung zwischen der Gewebelage (6) und der ersten und zweiten Metallringscheibe (4, 5) mittels einer Vielzahl von Schraubverbindungen (7) ausgebildet ist.

3. Kompensator nach Anspruch 2, wobei die erste Metallringscheibe (4) einen ersten Fixierflansch (44) aufweist und die zweite Metallringscheibe (5) einen zweiten Fixierflansch (55) aufweist und wobei die Gewebelage (6) mittels der Vielzahl von Schraubverbindungen (7) zwischen einem ersten Stützstreifen (8a) und dem ersten Fixierflansch (44) und einem zweiten Stützstreifen (8b) und dem zweiten Fixierflansch (55) mittels der Vielzahl von Schraubverbindungen (7) fluiddicht verbunden ist.

4. Kompensator nach einem der vorhergehenden Ansprüche, wobei das Drahtgewebe (2) einen nach außen vorstehenden ersten Endbereich (21) und einen nach außen vorstehenden zweiten Endbereich (22) aufweist, welche von einer Basis des Drahtgewebes (2) nach außen vorstehen.

5. Kompensator nach einem der vorhergehenden Ansprüche, wobei Verbindungselemente (9) vorgesehen sind, um das Drahtgewebe (2) jeweils mit der ersten und zweiten Metallringscheibe (4, 5) zu verbinden.

6. Kompensator nach einem der vorhergehenden Ansprüche, wobei die erste und zweite Metallringscheibe (4, 5) zu einer Mittelachse des Kompensators in einem Winkel (α) in einem Bereich von 40° bis 50° nach außen vorstehen und zueinander geneigt sind.

7. Kompensator nach einem der vorhergehenden Ansprüche, wobei das Drahtgewebe (2) an einer Basis (19), die parallel zur Längsrichtung (X-X) verläuft, einen Aufnahmebereich (20) aufweist.

8. Kompensator nach einem der vorhergehenden Ansprüche, wobei die Gewebelage (6) im Längsschnitt bogenförmig ausgebildet ist, um temperaturbedingte Längenänderungen auszugleichen.

9. Kompensator nach einem der Anspruch 7 oder 8, wobei das Drahtgewebe (2) an der Basis (19) einen ersten Auflagebereich (23) und einen zweiten Auflagebereich (24) aufweist, wobei die beiden Auflagebereiche (23, 24) dazu eingerichtet sind, auf einer Außenseite eines Rohrendes aufzuliegen.

10. Kompensator nach einem der vorhergehenden Ansprüche, wobei das Drahtgewebe (2) und/oder das Isolationsmaterial (3) und/oder die erste Metallringscheibe (4) und/oder die zweite Metallringscheibe (5) und/oder die Gewebelage (6) zweiteilig oder dreiteilig oder vierteilig, ausgebildet sind.

11. Kompensator nach einem der vorhergehenden Ansprüche, wobei ein Innendurchmesser des Kompensators ≥ 1 m ist.

12. Kompensator nach einem der vorhergehenden Ansprüche, wobei die erste und zweite Metallringscheibe (4, 5) eingerichtet sind, mittels Schweißverbindungen (13, 14) mit Rohrenden (101, 102) verbunden zu werden.

## Claims

1. A multi-layer, so longitudinally (X-X) split expansion joint for an industrial pipeline, that thereby the expansion joint is mountable to an existing pipeline from outside without a complete disassembly of a pipe connector,
wherein the expansion joint is configured to connect a first pipe end (101) to a second pipe end (102), comprising:
- a metallic wire mesh (2), which forms an inner layer of the expansion joint and comprises at least one separation in axial direction (X-X),
- a multi-piece insulating material (3), which surrounds the wire mesh at an outer side and forms a central layer of the expansion joint,
- a first, multi-piece metal ring disc (4) and a second, multi-piece metal ring disc (5), wherein the first metal ring disc (4) is arranged at a first longitudinal end (11) of the expansion joint and the second metal ring disc (5) is arranged at a second longitudinal end (12) of the expansion joint, and
- a fluid-tight fabric layer (6), which is arranged at the outside of the insulating material (3) and forms an outer layer of the expansion joint, and comprises at least one separation in axial direction (X-X),
- wherein the fabric layer (6) is fluid-tightly connected to the first metal ring disc (4) and the second metal ring disc (5).

2. The expansion joint according to claim 1, wherein a connection between the fabric layer (6) and the first and second metal ring discs (4, 5) is formed by means of a plurality of screw connections (7).

3. The expansion joint according to claim 2, wherein the first metal ring disc (4) comprises a first fixing flange (44) and the second metal ring disc (5) comprises a second fixing flange (55), and wherein the fabric layer (6) is fluid-tightly connected between a first support strip (8a) and the first fixing flange (44) by means of the plurality of screw connections (7) and between a second support strip (8b) and the second fixing flange (55) by means of the plurality of screw connections (7).

4. The expansion joint according to one of the preceding claims, wherein the wire mesh (2) comprises an outwardly projecting first end area (21) and an outwardly projecting second end area (22), which project outwardly from a base of the wire mesh (2).

5. The expansion joint according to one of the preceding claims, wherein connecting elements (9) are provided to connect the wire mesh (2) to the first and second metal ring discs (4, 5), respectively.

6. The expansion joint according to one of the preceding claims, wherein the first and second metal ring discs (4, 5) project outwards at an angle (α) in a range of 40° to 50° with respect to a central axis of the expansion joint and are inclined with respect to each other.

7. The expansion joint according to one of the preceding claims, wherein the wire mesh (2) comprises a receiving area (20) at a base (19), which runs parallel to the longitudinal direction (X-X).

8. The expansion joint according to one of the preceding claims, wherein the fabric layer (6) is arcuate in the longitudinal section to compensate for temperature-related changes in length.

9. The expansion joint according to claim 7 or 8, wherein the wire mesh (2) comprises a first contact area (23) and a second contact area (24) at the base (19), wherein the two contact areas (23, 24) are adapted to rest on an outer side of a pipe end.

10. The expansion joint according to one of the preceding claims, wherein the wire mesh (2) and/or the insulating material (3) and/or the first metal ring disc (4) and/or the second metal ring disc (5) and/or the fabric layer (6) are formed in two parts or three parts or four parts.

11. The expansion joint according to one of the preceding claims, wherein an inner diameter of the expansion joint is ≥ 1m.

12. The expansion joint according to one of the preceding claims, wherein the first and second metal ring discs (4, 5) are adapted to be connected to pipe ends (101, 102) by means of welded joints (13, 14).

## Revendications

1. Compensateur multicouche pour un pipeline industriel, divisé dans la direction longitudinale (X-X) de telle manière que le compensateur peut être monté ainsi sur une canalisation existante depuis l'extérieur sans un démontage complet d'un raccord pour tuyaux,
dans lequel le compensateur est mis au point pour relier une première extrémité de tuyau (101) à une deuxième extrémité de tuyau (102), comprenant :
- un treillis métallique (2), lequel forme une couche intérieure du compensateur et présente au moins une séparation dans la direction longitudinale (X-X),
- un matériau isolant en plusieurs parties (3), lequel entoure le treillis sur un côté extérieur et forme une couche centrale du compensateur,
- une première rondelle métallique (4) en plusieurs parties et une deuxième rondelle métallique (5) en plusieurs parties, dans lequel la première rondelle métallique (4) est disposée sur une première extrémité longitudinale (11) du compensateur et la deuxième rondelle métallique (5) est disposée sur une deuxième extrémité longitudinale (12) du compensateur, et
- une couche de tissu étanche aux fluides (6), laquelle est disposée sur le côté extérieur du matériau isolant (3) et forme une couche extérieure du compensateur, et présente au moins une séparation dans la direction longitudinale (X-X),
- dans lequel la couche de tissu (6) est reliée de manière étanche aux fluides à la première rondelle métallique (4) et à la deuxième rondelle métallique (5).

2. Compensateur selon la revendication 1, dans lequel une liaison entre la couche de tissu (6) et la première et la deuxième rondelle métallique (4, 5) est réalisée au moyen d'une pluralité de liaisons par vissage (7).

3. Compensateur selon la revendication 2, dans lequel la première rondelle métallique (4) présente une première bride de fixation (44) et la deuxième rondelle métallique (5) présente une deuxième bride de fixation (55) et dans lequel la couche de tissu (6) est reliée de manière étanche aux fluides au moyen de la pluralité de liaisons par vissage (7) entre une première bande de support (8a) et la première bride de fixation (44) et une deuxième bande de support (8b) et la deuxième bride de fixation (55) au moyen de la pluralité de liaisons par vissage (7).

4. Compensateur selon l'une quelconque des revendications précédentes, dans lequel le treillis (2) présente une première zone d'extrémité (21) faisant saillie vers l'extérieur et une deuxième zone d'extrémité (22) faisant saillie vers l'extérieur, lesquelles font saillie vers l'extérieur depuis une base du treillis (2).

5. Compensateur selon l'une quelconque des revendications précédentes, dans lequel des éléments de liaison (9) sont prévus pour relier le treillis (2) respectivement à la première et à la deuxième rondelle métallique (4, 5).

6. Compensateur selon l'une quelconque des revendications précédentes, dans lequel la première et la deuxième rondelle métallique (4, 5) font saillie vers l'extérieur selon un angle (α) dans une plage de 40° à 50° par rapport à un axe central du compensateur et sont inclinées l'une par rapport à l'autre.

7. Compensateur selon l'une quelconque des revendications précédentes, dans lequel le treillis (2) présente une zone de réception (20) sur une base (19), qui s'étend de manière parallèle à la direction longitudinale (X-X).

8. Compensateur selon l'une quelconque des revendications précédentes, dans lequel la couche de tissu (6) est réalisée en forme d'arc dans la coupe longitudinale pour compenser des modifications de longueur liées à la température.

9. Compensateur selon l'une quelconque des revendications 7 ou 8, dans lequel le treillis (2) présente sur la base (19) une première zone d'appui (23) et une deuxième zone d'appui (24), dans lequel les deux zones d'appui (23, 24) sont mises au point pour reposer sur un côté extérieur d'une extrémité de tuyau.

10. Compensateur selon l'une quelconque des revendications précédentes, dans lequel le treillis (2) et/ou le matériau isolant (3) et/ou la première rondelle métallique (4) et/ou la deuxième rondelle métallique (5) et/ou la couche de tissu (6) sont réalisés en deux parties ou en trois parties ou en quatre parties.

11. Compensateur selon l'une quelconque des revendications précédentes, dans lequel un diamètre intérieur du compensateur est ≥ 1 m.

12. Compensateur selon l'une quelconque des revendications précédentes, dans lequel la première et la deuxième rondelle métallique (4, 5) sont mises au point pour être reliées à des extrémités de tuyau (101, 102) au moyen de liaisons par soudage (13, 14).
